# EUROPEAN PATENT SPECIFICATION

(11) **EP 3 423 924 B1**
(45) Date of publication and mention of the grant of the patent: **11.08.2021**
(21) Application number: 16892861.2
(22) Date of filing: 01.03.2016
(51) Int. Cl.: G06F 3/041, G02F 1/00, G02F 1/1335, G02B 5/00, G02B 5/20, G02B 5/22, G06F 21/84

(54) **LIGHT ABSORPTION PRIVACY FILM**
LICHTABSORBIERENDE SICHTSCHUTZFOLIE
FILM DE CONFIDENTIALITÉ À ABSORPTION DE LUMIÈRE

(43) Date of publication of application: 09.01.2019
(73) Proprietor: Hewlett-Packard Development Company, L.P., Spring TX 77389 (US)
(72) Inventor: WU, Kuan-ting, Taipei 11568 (TW); CHU, Wei, Kuang, Taipei 11568 (TW); KU, Charlie, Taipei 11568 (TW)
(74) Representative: Haseltine Lake Kempner LLP
(86) International application number: PCT/US2016/020208
(87) International publication number: WO 2017/151114

(56) References cited:
- EP-A1- 2 421 255
- WO-A1-2014/103342
- JP-A- 2014 142 637
- KR-A- 20140 143 829
- US-A1- 2009 115 943
- US-A1- 2010 201 242
- US-A1- 2015 131 154
- US-A1- 2015 338 561
- US-B1- 6 398 370

## Description

### BACKGROUND

A computing device may include and/or may be in communication with a display device that allows a user to view content. Some display devices may be a touch screen display device that allows a user to provide touch inputs. For example, a user may use their finger and/or a stylus pen to provide touch inputs on the screen in order to manipulate the content on the screen. US2015/131154A1, EP 2421255 and WO 2014/103342 represent related art, disclosing privacy films configured to block content displayed by a display panel.

### BRIEF DESCRIPTION OF THE DRAWINGS

Some examples of the present application are described with respect to the following figures:
FIG. 1 is a block diagram of an example privacy film to provide privacy and to absorb light;
FIG. 2 is a block diagram of an example display device that includes a privacy film to provide privacy and to absorb light; and
FIG. 3 is a block diagram of an example display device that includes a privacy film to provide privacy and to absorb light.

### DETAILED DESCRIPTION

As described above, a computing device may include and/or may be in communication with a display device that allows a user to view content. Examples of these devices include smartphones, tablets, laptops, monitors, and the like. Because the use of such devices has become prevalent, protecting a user's privacy while using these devices has become a concern. Additionally, prolonged use of these display devices may cause health issues for a user, such as discomfort to the user's eyes, eye damage and/or disease, premature aging of the eye, and the like.

Examples discussed herein provide techniques for providing privacy and ultraviolet (UV) and/or blue light absorption through the use of a light absorption privacy film. The privacy film includes privacy gates to at least partially block content displayed by a display panel of a display device when the privacy film is adjacent to the display panel. The privacy film also includes light absorption material to absorb light (e.g., UV light and/or blue light) that may be emitted from the content. In some examples, the light absorption material may be included, contained within, and/or part of each of the privacy gates in the privacy film. In other examples, the light absorption material may surround the privacy gates in the privacy film.

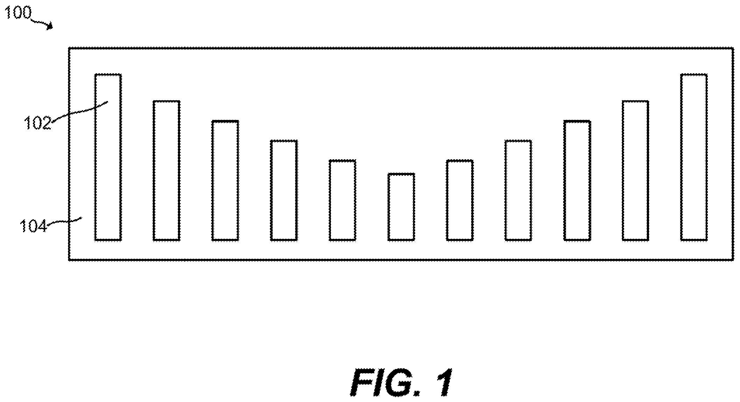

Referring now to the figures, FIG. 1 is a block diagram of an example privacy film 100 to provide privacy and to absorb light. The exterior of the privacy film 100 may be made of any suitable material. In some examples, the exterior of the privacy film 100 may be a plastic substrate, such as a polyacrylic, a poly (methyl methacrylate) (PMMA), a polycarbonate, cyclic olefin copolymer (COC), polyethylene terephthalate (PET), and the like.

The privacy film 100 includes any suitable number of privacy gates 102. The privacy gates 102 may be made of any suitable material capable of at least partially blocking content that may be displayed by a display panel of a display device when the privacy film 100 is adjacent to the display panel. The privacy gates 102 have a suitable gradient level and density (e.g., number of privacy gates 102) to control the degree to which content is blocked and/or displayed through the privacy gates 102.

In some examples, the plurality of privacy gates 102 may each be angled at a particular angle with respect to a surface of the privacy film 102, where the particular angle may determine the amount of content to be displayed through and/or blocked by the privacy gates 102.

The privacy film 100 also includes area 104, which is the area surrounding the privacy gates 102. The area 104 may allow the content from the display panel of the display device to be at least partially displayed through the privacy gates 102.

The privacy film 100 also includes light absorption material to absorb light from the content displayed by the display panel of the display device. The light absorption material may be any suitable material to absorb UV and/or blue light, such as transparent and/or semi-transparent blue light absorbers, UV absorbers, and the like. Examples of transparent and/or semi-transparent blue light absorbers include iron oxide, NiTiO₃, lutein, lead sulfochromate yellow, lead antimonite yellow, lead-tin-antimony yellow, diarylide, arylide, bisacetoacetarylide, benzimidazolone, and the like. Examples of UV absorbers include benzophenones, anthranilates, dibenzoylmethanes, PABA derivatives, salicylates, cinnamates, camphor derivatives (e.g., 290-400nm), and the like. The degree of UV and/or blue light absorption may be controlled by the density of the light absorption material. In some examples, the light absorption material is within each of the privacy gates 102. In other examples, the light absorption material surrounds the privacy gates 102 (e.g., within area 104).

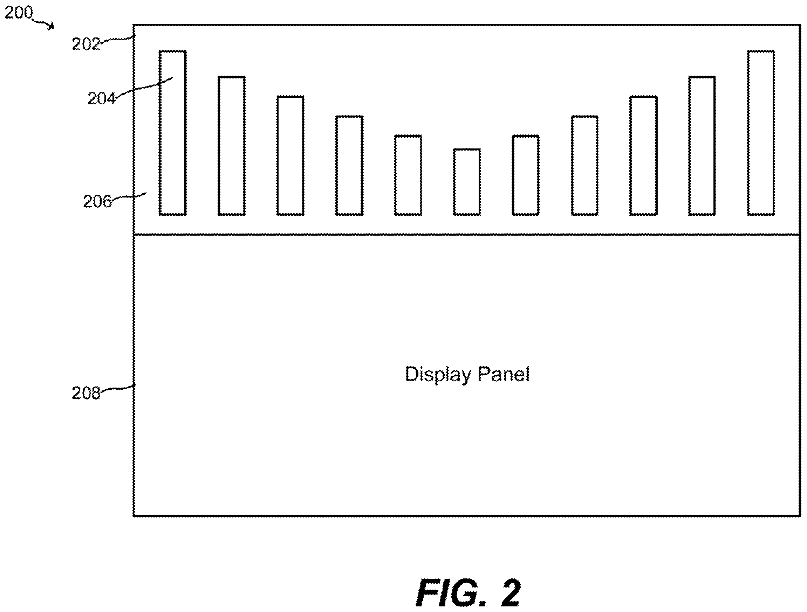

FIG. 2 is a block diagram of an example display device 200 that includes a privacy film 202 to provide privacy and to absorb light. The privacy film 202 may be similar to the privacy film 100 of FIG. 1.

The display device 200 may also include a display panel 208 to display content. The display panel 208 may be any suitable type of display panel, such as a liquid crystal display (LCD), an organic light emitting diode (OLED) display, a polymer light emitting diode (PLED) display, a plasma display, bi-stable display (e.g., a cholesteric display, a cholesteric LCD, a micro-electromechanical system (MEMS)-based display, an electronic ink display, etc.), and the like.

The privacy film 202 of FIG. 2 may be adjacent to (e.g., next to, touching, etc.) the display panel 208 and may include any suitable number of privacy gates 204 (e.g., similar to the privacy gates 102 of FIG. 1) as well as light absorption material. The privacy film 202 may also include area 206 that surrounds the privacy gates 204, similar to the area 104 of FIG. 1. The light absorption material in the privacy film 202 may be within each of the privacy gates 204 or surrounding the privacy gates 204 (e.g., in area 206).

The privacy film 202 is removable from the display panel 208.

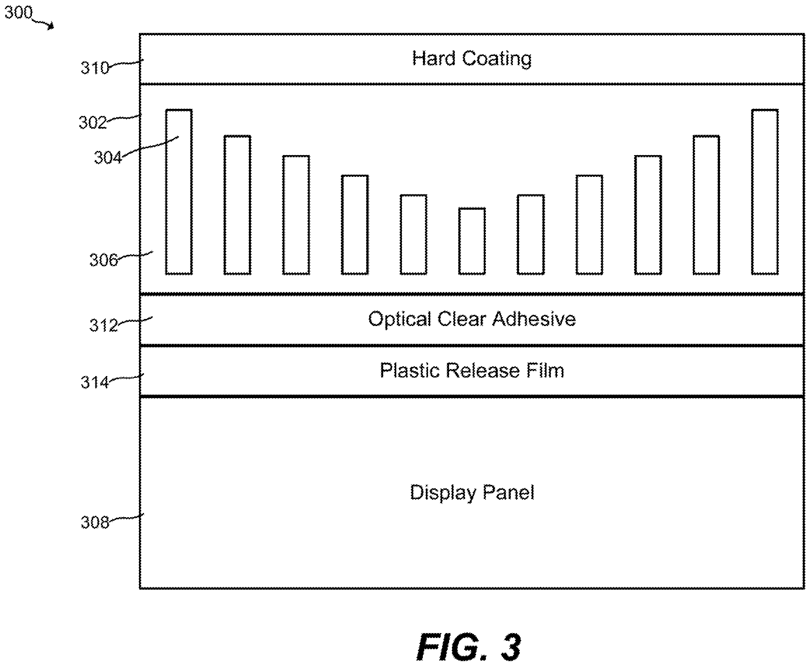

FIG. 3 is a block diagram of an example display device 300 that includes a privacy film 302 to provide privacy and to absorb light. The privacy film 302 is similar to the privacy film 100 of FIG. 1 and the privacy film 202 of FIG. 2.

The display device 300 includes a display panel 308, which is similar to the display panel 208 of FIG. 2. The privacy film 302 may be adjacent to the display panel 308 and may include any suitable number of privacy gates 304 (e.g., similar to the privacy gates 102 of FIG. 1 and the privacy gates 204 of FIG. 2). The privacy film 302 also includes light absorption material that may either be within each of the privacy gates 304 or within area 306, which is the area surrounding the privacy gates 304 (e.g., similar to the area 104 of FIG. 1 and the area 206 of FIG. 2). In some examples, the privacy gate 302 may also include a hard coating 310, which may be any suitable hard coating to protect the privacy film 302.

In the example of FIG. 3, the privacy film includes a plastic release film 314 that is used to keep the privacy film 302 from adhering to the display panel 308. The plastic release film 314 may be made of any suitable material (e.g., a PET) and may be removed when the privacy film 302 is ready to be permanently adhered to the display panel 308.

## Claims

1. A privacy film, comprising:
privacy gates (102, 204, 304) configured to at least partially block content displayed by a display panel (208, 308) when the privacy film (100, 202, 302) is adjacent to the display panel;
light absorption material configured to absorb light from the content; and
a removable plastic release film (314) configured to keep the privacy film from adhering permanently to the display panel, **characterized in that**
the privacy gates have a gradient level configured to control the degree to which content is blocked, wherein individual privacy gates have varying heights and the varying heights are smallest at a centermost privacy gate, relative to the display panel, and are progressively larger towards outermost privacy gates.

2. The privacy film of claim 1, wherein the privacy film (100, 202, 302) is removable from the display panel (208, 308).

3. The privacy film of claim 1, wherein the light absorption material is within each of the privacy gates (102, 204, 304).

4. The privacy film of claim 1, wherein the light absorption material surrounds the privacy gates (102, 204, 304).

5. The privacy film of claim 1, wherein the light absorption material absorbs at least one of ultraviolet light and blue light.

6. A display device, comprising:
a display panel (208, 308) to display content; and
the privacy film according to claim 1.

7. The display device of claim 6, wherein the privacy film (100, 202, 302) is removable from the display panel (208, 308).

8. The display device of claim 6, wherein the light absorption material is within each of the privacy gates (102, 204, 304).

9. The display device of claim 6, wherein the light absorption material surrounds the privacy gates (102, 204, 304).

10. The display device of claim 6, wherein the light absorption material absorbs at least one of ultraviolet light and blue light.

11. The privacy film of claim 1, wherein the privacy gates (102, 204, 304) are each angled at a particular angle with respect to a surface of the privacy film (100, 202, 302).

12. The privacy film of claim 11, wherein the privacy film (100, 202, 302) is removable from the display panel (208, 308).

13. The privacy film of claim 11, wherein the light absorption material is within each of the privacy gates (102, 204, 304) or wherein the light absorption material surrounds the privacy gates.

14. The privacy film of claim 11, wherein the light absorption material absorbs at least one of ultraviolet light and blue light.

## Patentansprüche

1. Sichtschutzfolie, die Folgendes umfasst:
Sichtschutzblenden (102, 204, 304), die dazu konfiguriert sind, Inhalt, der durch ein Anzeigefeld (208, 308) angezeigt wird, wenigstens teilweise zu blockieren, wenn die Sichtschutzfolie (100, 202, 302) an das Anzeigefeld angrenzt;
Lichtabsorptionsmaterial, das dazu konfiguriert ist, Licht von dem Inhalt zu absorbieren; und
eine abnehmbare Kunststoffabziehfolie (314), die dazu konfiguriert ist, zu verhindern, dass die Sichtschutzfolie dauerhaft an dem Anzeigefeld haftet, **dadurch gekennzeichnet, dass**
die Sichtschutzblenden eine Verlaufsstufe aufweisen, die dazu konfiguriert ist, den Grad, zu dem ein Inhalt blockiert wird, zu steuern, wobei einzelne Sichtschutzblenden unterschiedliche Höhen aufweisen und die unterschiedlichen Höhen an einer mittigsten Sichtschutzblende, relativ zu dem Anzeigefeld, am kleinsten sind und zu den äußersten Sichtschutzblenden hin zunehmend größer sind.

2. Sichtschutzfolie nach Anspruch 1, wobei die Sichtschutzfolie (100, 202, 302) von dem Anzeigefeld (208, 308) abnehmbar ist.

3. Sichtschutzfolie nach Anspruch 1, wobei sich das Lichtabsorptionsmaterial innerhalb jeder der Sichtschutzblenden (102, 204, 304) befindet.

4. Sichtschutzfolie nach Anspruch 1, wobei das Lichtabsorptionsmaterial die Sichtschutzblenden (102, 204, 304) umgibt.

5. Sichtschutzfolie nach Anspruch 1, wobei das Lichtabsorptionsmaterial ultraviolettes Licht und/oder blaues Licht absorbiert.

6. Anzeigevorrichtung, die Folgendes umfasst:
ein Anzeigefeld (208, 308), um Inhalt anzuzeigen; und
die Sichtschutzfolie nach Anspruch 1.

7. Anzeigevorrichtung nach Anspruch 6, wobei die Sichtschutzfolie (100, 202, 302) von dem Anzeigefeld (208, 308) abnehmbar ist.

8. Anzeigevorrichtung nach Anspruch 6, wobei sich das Lichtabsorptionsmaterial innerhalb jeder der Sichtschutzblenden (102, 204, 304) befindet.

9. Anzeigevorrichtung nach Anspruch 6, wobei das Lichtabsorptionsmaterial die Sichtschutzblenden (102, 204, 304) umgibt.

10. Anzeigevorrichtung nach Anspruch 6, wobei das Lichtabsorptionsmaterial ultraviolettes Licht und/oder blaues Licht absorbiert.

11. Sichtschutzfolie nach Anspruch 1, wobei die Sichtschutzblenden (102, 204, 304) jeweils in einem bestimmten Winkel in Bezug auf eine Oberfläche der Sichtschutzfolie (100, 202, 302) abgewinkelt sind.

12. Sichtschutzfolie nach Anspruch 11, wobei die Sichtschutzfolie (100, 202, 302) von dem Anzeigefeld (208, 308) abnehmbar ist.

13. Sichtschutzfolie nach Anspruch 11, wobei sich das Lichtabsorptionsmaterial innerhalb jeder der Sichtschutzblenden (102, 204, 304) befindet oder wobei das Lichtabsorptionsmaterial die Sichtschutzblenden umgibt.

14. Sichtschutzfolie nach Anspruch 11, wobei das Lichtabsorptionsmaterial ultraviolettes Licht und/oder blaues Licht absorbiert.

## Revendications

1. Film de confidentialité, comprenant :
des grilles de confidentialité (102, 204, 304) conçues pour bloquer au moins partiellement du contenu affiché par un panneau d'affichage (208, 308) lorsque le film de confidentialité (100, 202, 302) est adjacent au panneau d'affichage ;
un matériau à absorption de lumière conçu pour absorber de la lumière provenant du contenu ; et
un film à décollement en plastique amovible (314) conçu pour empêcher le film de confidentialité d'adhérer de manière permanente au panneau d'affichage, **caractérisé en ce que**
les grilles de confidentialité ont un niveau de gradient configuré pour commander le degré auquel du contenu est bloqué, les grilles de confidentialité individuelles ayant des hauteurs variables et les hauteurs variables étant les plus petites au niveau d'une grille de confidentialité la plus centrale, par rapport au panneau d'affichage, et étant progressivement plus grandes vers des grilles de confidentialité les plus à l'extérieur.

2. Film de confidentialité selon la revendication 1, dans lequel le film de confidentialité (100, 202, 302) est amovible du panneau d'affichage (208, 308).

3. Film de confidentialité selon la revendication 1, dans lequel le matériau à absorption de lumière est à l'intérieur de chacune des grilles de confidentialité (102, 204, 304).

4. Film de confidentialité selon la revendication 1, dans lequel le matériau à absorption de lumière entoure les grilles de confidentialité (102, 204, 304).

5. Film de confidentialité selon la revendication 1, dans lequel le matériau à absorption de lumière absorbe la lumière ultraviolette et/ou la lumière bleue.

6. Dispositif d'affichage, comprenant :
un panneau d'affichage (208, 308) pour afficher du contenu ; et
le film de confidentialité selon la revendication 1.

7. Dispositif d'affichage selon la revendication 6, dans lequel le film de confidentialité (100, 202, 302) est amovible du panneau d'affichage (208, 308).

8. Dispositif d'affichage selon la revendication 6, dans lequel le matériau à absorption de lumière est à l'intérieur de chacune des grilles de confidentialité (102, 204, 304).

9. Dispositif d'affichage selon la revendication 6, dans lequel le matériau à absorption de lumière entoure les grilles de confidentialité (102, 204, 304).

10. Dispositif d'affichage selon la revendication 6, dans lequel le matériau à absorption de lumière absorbe la lumière ultraviolette et/ou la lumière bleue.

11. Film de confidentialité selon la revendication 1, dans lequel les grilles de confidentialité (102, 204, 304) sont chacune inclinées à un angle particulier par rapport à une surface du film de confidentialité (100, 202, 302).

12. Film de confidentialité selon la revendication 11, dans lequel le film de confidentialité (100, 202, 302) est amovible du panneau d'affichage (208, 308).

13. Film de confidentialité selon la revendication 11, dans lequel le matériau à absorption de lumière est à l'intérieur de chacune des grilles de confidentialité (102, 204, 304) ou dans lequel le matériau à absorption de lumière entoure les grilles de confidentialité.

14. Film de confidentialité selon la revendication 11, dans lequel le matériau à absorption de lumière absorbe la lumière ultraviolette et/ou la lumière bleue.
